# EUROPEAN PATENT SPECIFICATION

(11) **EP 3 009 664 B1**
(45) Date of publication and mention of the grant of the patent: **28.02.2018**
(21) Application number: 14188797.6
(22) Date of filing: 14.10.2014
(51) Int. Cl.: F02M 65/00, G01F 1/68, G01F 1/684, G01F 22/00

(54) **High-resolution measurement of flow distribution of sprays**
Hochauflösende Messung der Strömungsverteilung von Sprays
Distribution de flux de mesure haute résolution de pulvérisations

(43) Date of publication of application: 20.04.2016
(73) Proprietor: Continental Automotive GmbH, 30165 Hannover (DE)
(72) Inventor: Maragliulo, Marco, 56028 San Miniato / PI (IT)

(56) References cited:
- WO-A1-2013/093328
- GB-A- 2 496 863
- JP-A- H1 054 819
- US-A- 5 567 865
- US-A1- 2007 125 163

## Description

### Field of invention

The present invention relates to the field of measuring a flow distribution of a liquid spray stream. In particular the present invention relates to a measurement device and to a method for measuring a flow distribution of a liquid spray stream which has been atomized by a nozzle.

### Art Background

For developing combustions engines which have both a small fuel consumption and a small pollutant emission it is necessary to have a good knowledge about the characterization of a fuel spray which is atomized by an injection valve operating as a nozzle for producing a pulsed fuel spray. This holds both for the spray characteristic of a direct injection valve which injects the fuel spray directly into a combustion volume of the combustion engine and for the spray characteristic of an injection valve which is located at an intake tract of a combustion engine.

It is known to characterize the spatial distribution of a fuel spray by a grid of cells placed at a defined distance from the spray nozzle. The amount of fuel collected in each cell is weighted after a defined amount of time or injection events and the outcome is a 2d distribution of total flow. This kind of characterization has a strong limitation in accuracy limited by cells dimension and most importantly yields only a static characterization. It is impossible to measure the spatial characteristic of a fuel spray as a function of time.
Another known solution involves the use of electrical sensing wires associated to a measurement unit which is configured for measuring an ohmic resistance change thereof. One single wire is able to measure instantaneously the mass flow impinging it. This is achieved by heating the wire with an electric current that is suspended in the fuel flow. The wire electrical resistance increases as the wire temperature increases, which limits electrical current flowing through the circuit. When a liquid spray flows past the wire, the wire cools, its resistance decreases, and therefore more current is allowed to flow through the circuit. As more current flows, the wire temperature increases again until equilibrium is reached again. The amount of current required to maintain the wire temperature is proportional to the mass of the liquid spray flowing past the wire.
The use of wires allows also measuring the temporal evolution of the liquid spray stream, by determining the temporal course of the ohmic resistance of the sensing wire.

A grid of wires of the same type of the wire described above can be used to perform, at the same time, more measurement of the same spray, thus improving the resolution of the measurement. Resolution can be improved increasing the density of the wires in the grid, i.e. reducing the grid size.

In any case, resolution cannot be increased indefinitely, i.e. analogical measurements cannot be performed with the systems described above, as the grid size cannot be reduced to zero.

US 2007/125163 A1 relates to a method for monitoring fluid properties with a distributed sensor in a wellbore having an inner surface, a top and a bottom comprising causing the distributed sensor to assume a helical shape, pulling the distributed sensor towards the bottom of the wellbore, while retaining the helical shape of the distributed sensor, feeding the distributed sensor into the wellbore so that the distributed sensor is in substantially continuous contact with the inner surface, and allowing the distributed sensor to become at least partially supported by friction at the inner surface.

US 5567865 A discloses relates to determining the size of airborne water droplets having a diameter from approximately 1 to 100 µm, if such water droplets move at a velocity of 50 to 150 m/s relative to a measuring probe and strike it, in the probe body, whose front face toward the flow has a vapor-deposited platinum film, approximately 0.5 mu m thick, whose temperature is kept constant at above 100 °C by means of a bridge circuit. An analog voltage output signal of a bridge circuit is digitized and then further processed, with the aid of an evaluation computer program, among others, and with the aid of a formula derived from an energy balance for a droplet striking a platinum film, determines the droplet diameter from analyzed identifying variables of a droplet signal and from other known parameters.

WO 2013/093328 A1 discloses a method for calibrating a sensor for measuring data representative of the speed of a fluid stream connectable to means for acquiring the measurement signal of said sensor, said method comprising a step of inserting said measurement sensor to be tested into a measurement chamber housing a reception mount for the sensor to be calibrated, a step of generating, inside the measurement chamber, a forced-circulation fluid stream using a fluid stream generator connectable to said measurement chamber, characterised in that said method further comprises a step of moving the reception mount of the measurement sensor within the measurement chamber subjected to said stream during which, over time, data representative of the speed at which said reception mount is moved is acquired, at the same time as the signal of the measurement sensor to be calibrated, for at least some of said motion by said reception mount.

There may be a need for providing a measurement device and a measurement method which allows reaching a measurement resolution higher than that of the known wire measurement systems for the spatial and/or temporal characterization of the flow distribution of a liquid spray stream which has been atomized by a nozzle. In particular, there may be a need for providing a measurement device which allows achieving an analogical measurement system for measuring the mass of a liquid spray stream which has been atomized by a nozzle.

### Summary of the Invention

This need may be met by the subject matter according to the independent claims. Advantageous embodiments of the present invention are described by the dependent claims.

According to a first aspect of the invention it is provided a measurement device for measuring a flow distribution of a liquid spray stream which has been atomized by a nozzle, the measurement device comprising at least a first sensing wire,
an electric power supply unit, which is electrically connected to the sensing wire and which is configured for supplying an electric current flowing through the sensing wire, and a measurement unit, which is electrically connected to the sensing wire and which is configured for measuring an ohmic resistance change of the sensing wire, and a movement unit, which is mechanically connected to the sensing wire for moving the sensing wire at least on a first movement plane across a spray volume of the liquid spray stream.

The described device provides the advantage that, by moving a wire across the spray stream along an axis X, the device is able to measure the mass flow of the stream along the axis X, with an analogical precision, i.e. independently from the grid size of a grid of cells or of wires, as in known solutions.

The liquid spray stream may be in particular a fuel spray stream which has been atomized or ejected by an injection valve of a vehicle. The fuel may be gasoline, diesel and/or bioethanol. As a consequence, when the described measurement device is employed in a combustion engine measurement equipment, the flow distribution of fuel being injected directly into a combustion chamber of the combustion engine and/or into an intake tract of the combustion engine can be determined experimentally. The vehicle can be any kind of vehicle which uses a combustion engine. The vehicle may be e.g. a car, a truck, a plane, a helicopter, a boat or a locomotive. In general the device of the present invention can be conveniently used for measuring the mass flow of any spray stream which is stable or easily replicable.

According to an embodiment of the present invention, the movement unit is mechanically connected to sensing wire for performing a translation of the sensing wire.

According to the present invention, the first movement plane is orthogonal to a spray axis of the nozzle.

According to a further embodiment of the present invention, the movement unit is mechanically connected to the sensing wire for rotating the sensing wire around a rotation axis orthogonal to the movement plane. According to this embodiment the wire may be preliminarily rotated around a rotation axis orthogonal to the first movement plane and then moved parallel to itself on the first movement plane.

Advantageously, this permits to perform measurements with several angulations around an axis, in particular the axis of the nozzle. This make it possible to perform the measurement of the mass flow, not only along the axis X, but on a complete plane XY, in particular a plane orthogonal to the axis of the nozzle.

According to another embodiment of the present invention, the measurement device comprises at least one further sensing wire, angularly spaced from the first sensing wire, the electric power supply unit being electrically connected also with the further sensing wire and being configured for supplying a further electric current flowing through the further sensing wire, wherein the measurement unit is electrically connected with the further sensing wire and is configured for measuring an ohmic resistance change of the further sensing wire, and wherein the movement unit is mechanically connected also to the further sensing wire for moving the further sensing wire on the first movement plane across a spray volume of the liquid spray stream. In particular the measurement device may comprise a plurality of sensing wires lying on a common plane parallel to the first movement plane and angularly spaced from each other. More in particular, the plurality of sensing wires may be angularly spaced from each other in such a way that the angle between any couple of angularly adjacent wires of said plurality of wires is constant.
By moving the plurality of wires across the spray stream along an axis X, the device is able to measure the mass flow of the stream not only along a single axis X, but also along a plurality of directions lying on a common plane XY, in particular a plane orthogonal to the axis of the nozzle.

In this respect it is mentioned that it is essential that there is no electrical contact between each of the sensing wires with any other of the sensing wires, in order to provide independent measurements. In order to avoid such an electrical contact the different wires may by arranged in the space without any mechanical contact. Alternatively or in combination, the different wires may be insulated from each other simply by means of an appropriate insulating coating.

According to another possible embodiment of the present invention, the number of the wires of said plurality of wires is equal or greater than 8, i.e. with an angle of 22.5° (8 x 22.5° = 180°) between any couple of adjacent wires. This may provide the advantage that the measurement accuracy of the measurement system can be increased significantly.

According to another possible embodiment of the present invention, movement unit is mechanically connected to the sensing wires for moving the sensing wires on a second movement plane and/or a third movement plane across a spray volume of the liquid spray stream, the second movement and third movement planes being parallel to a spray axis of the nozzle. In such a manner the distance between the wire or the wires and the nozzle can be varied, thus permitting to measure the mass flow on three mutually orthogonal planes XY, YZ and ZX.

According to a further aspect of the invention it is provided a measuring method for measuring a flow distribution of a liquid spray stream which has been atomized by a nozzle, the method comprising the steps of:
positioning a sensing wire within a spray volume of the liquid spray stream,
supplying an electric current flowing through the sensing wire by means of an electric power supply unit which is electrically connected with the sensing wire,
moving the sensing wire at least on a first movement plane across the spray volume of the liquid spray stream, by means of a movement unit, which is mechanically connected to the sensing wire,
measuring an ohmic resistance change of the sensing wire resulting from a cooling of the sensing wire caused by particles of the liquid spray stream impinging onto the sensing wire by means of a measurement unit which is electrically connected with the sensing wire.
Also the described method is based on the idea that, by moving a wire across the spray stream along an axis X, it is possible to measure the mass flow of the stream along the axis X, with an analogical precision, i.e. independently from the grid size of a grid of cells or of wires.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a first embodiment of a measurement device comprising a single sensing wire, according to the present invention.
- Figure 2: illustrates method steps for measuring the flow distribution of a liquid spray stream which has been atomized by a nozzle by employing the measurement device shown in Figure 1.
- Figure 3: shows a visualization of a spatial mono-dimensional flow distribution, which may be obtained by the measurement method illustrated in Figure 2.
- Figure 4: illustrates other method steps for measuring the flow distribution of a liquid spray stream which has been atomized by a nozzle by employing the measurement device shown in Figure 1.
- Figure 5: shows the arrangement of a plurality of wires which may be used in a second embodiment of measurement device according to the present invention.
- Figure 6: shows a visualization of a spatial two-dimensional flow distribution which may be obtained by the measurement method illustrated in Figure 4, or by the device embodiment of Figure 5.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

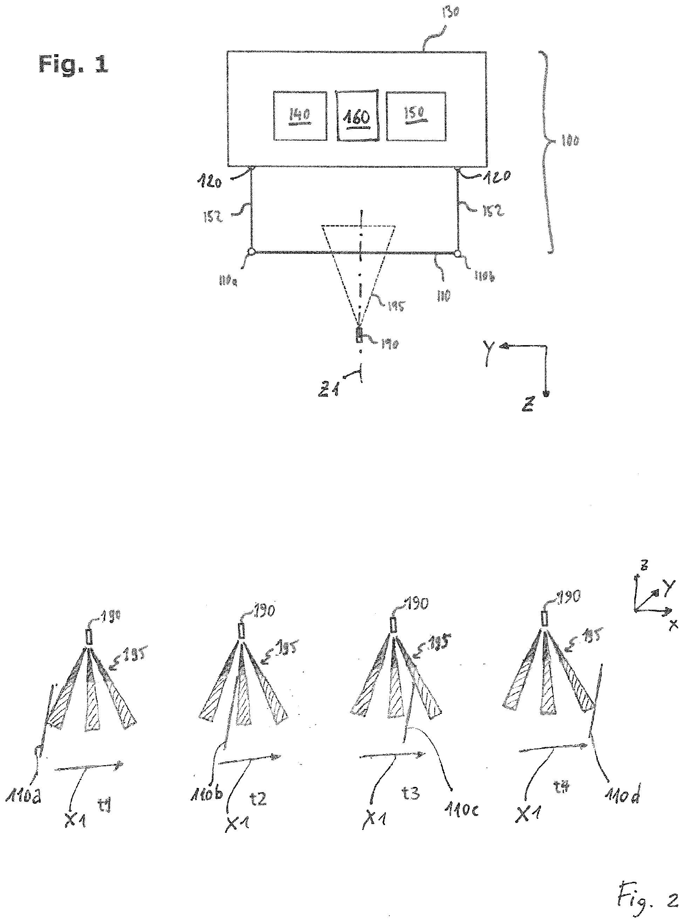

Figure 1 shows a measurement device 100 for measuring a flow distribution of a liquid spray stream 195 which has been atomized by a nozzle 190. The measurement device 100 comprises a sensing wire 110, which is connected, via two connection leads 152, with a control unit 130. For spatial reference, in Figure 1 a three-axis Cartesian coordinate system XYZ is shown. Axis Y is parallel to the sensing wire 110, axis Z is parallel to an ejection axis Z1 of the nozzle 190 and axis X is orthogonal to the plane of Figure 1.

The control unit 130 comprises an electric power supply unit 140 and a measurement unit 150. During operation, the electric power supply unit 140 drives an electric current through the sensing wire 110. The electric current heats up the sensing wire until in a thermal condition of equilibrium the sensing wire 110 adopts a certain temperature.

In operation, particles of the liquid spray stream 195, which has been ejected by the nozzle 190 along the ejection axis Z1, impinge onto the sensing wire 110 causing the temperature of the sensing wire 110 to decrease. As a consequence, the ohmic resistance of the sensing wire 110 will also decrease. Thereby, the amount of the decrease of the ohmic resistance of the sensing wire 110 will be indicative for the intensity of the liquid flow stream 195.

The electric current is provided by a voltage source of the electric power supply unit 140. As a consequence, when the ohmic resistance of the sensing wire 110 decreases, the current flowing between an input end 110a and an output end 110b of the sensing wire 110 increases. This current increase is measured by the measurement unit.

According to a principle already know in the art, the single sensing wire 110 is able to measure instantaneously the mass flow of the liquid spray stream 195 impinging onto the sensing wire 110. This is achieved by heating up the sensing wire 110 with an electric current, which is provided by the electric power supply unit 140. The sensing wire 110 is suspended within the liquid spray stream 195 like e.g. a toaster wire. The wire electrical resistance increases as the wire temperature increases, which limits electrical current flowing through the sensing wire 110. When particles of the liquid spray stream hit the sensing wire 110, the sensing wire 110 cools down and, as a consequence, its resistance decreases. This in turn allows a higher current to flow through the sensing wire 110. As a higher current flows, the temperature of the sensing wire 110 increases until the temperature (and resistance) reach thermal equilibrium again. The amount of current required to maintain the temperature of the sensing wire 110 is proportional to the mass of the flow of the liquid spray stream 195 hitting the sensing wire 110. An integrated electronic circuit being comprised in the measurement unit 150 converts the measurement result of the current into a corresponding voltage signal. This voltage signal is indicative for the amount of the flow of the liquid spray stream 195 hitting the sensing wire 110.
According to the present invention, measurement device 100 comprises a movement unit 120, which is mechanically connected to the sensing wire 110, directly or via the two connection leads 152, for moving the sensing wire 110 on a first movement plane XY across a spray volume of the liquid spray stream 195. The movement unit 120 permits to translate the sensing wire 110 along a direction of movement X1, parallel to axis X and to rotate the sensing wire 110 around the axis Z.
In the embodiment of Figure 1 the first movement plane XY is orthogonal to the ejection axis Z1 of the nozzle 190. According to other embodiments (not shown) of the present invention, the first movement plane XY has another inclination with respect to the ejection axis Z1.
The control unit 130 comprises a module 160 for controlling the movement unit 120, i.e. in particular for controlling the position and speed of the sensing wire 110 in the first movement plane XY.

Figure 2 illustrates the basic principle of measuring a flow distribution of a liquid spray stream 195 which has been atomized by a nozzle 190 by employing the measurement device 100 shown in Figure 1, in particular for measuring the mass of the liquid spray stream 195. For a reliable measurement, the measuring procedure starts after a stable liquid spray stream 195 has been established, after a transient time. When the nozzle 190 is the injection valve of a vehicle, the transient time is typically less than 1 ms.

Figure 2 illustrates the temporal development of the movement of the wire 110 across the liquid spray stream 195 at time points t1, t2, t3 and t4, after the transient time has lapsed. At each time point t1, t2, t3 and t4 correspond a respective position 110a, 110b, 110c, 110d, of the wire 110, translating parallel to itself along a direction of movement X1, which is parallel to axis X. In particular the initial time t1 corresponds to the initial position 110a and the final time t4 corresponds to the final position 110d.

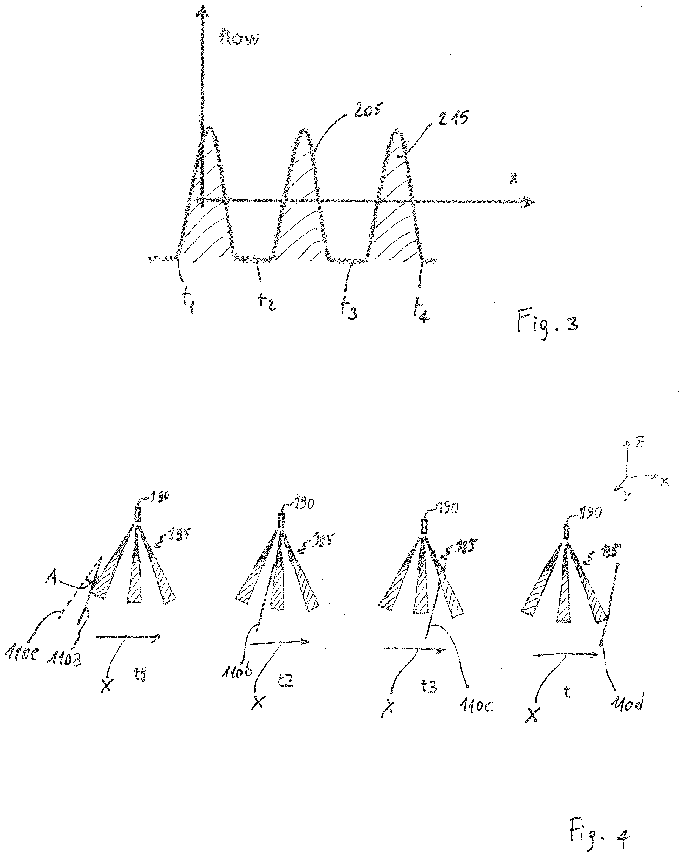

Figure 3 shows the corresponding measured curve 205 representing the flow of the liquid spray stream 195 impinging onto the sensing wire 110, along the direction of the axis X, from time t1 to time t4. The curve 205 represents an analogical measurement of the flow of the liquid spray stream 195. The calculation of the two-dimensional area 215 below the curve 205 is proportional to the mass of liquid ejected by the nozzle 190.

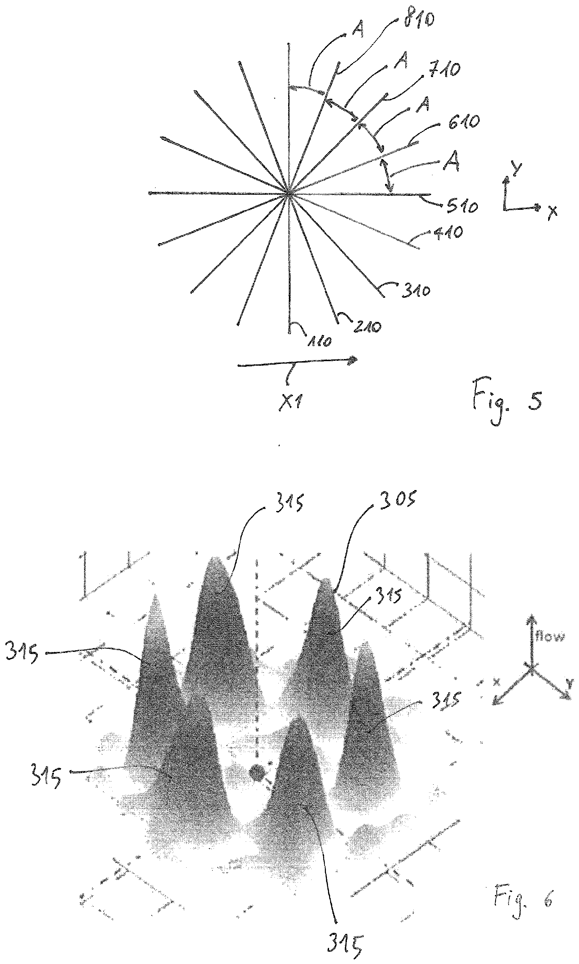

Figure 4 illustrates another temporal development of the movement of the wire 110 across the liquid spray stream 195. At time point t0 the wire 110 is in a preliminary position 110e from which, in the time interval between t0 and t1, is rotated around the axis Z to reach the initial position 110a. Positions 110a and 110e lies on the same plane XY, spaced from each other of an angle A = 22,5° or smaller. After time t0, the wire 110 is translated along the direction of movement X1 across the spray volume of the liquid spray stream 195, to reach the final position 110d at time t4, as shown also in Figure 2.
After time t4 the procedure above described is repeated and the wire 110 is again rotated around the rotation axis Z and again translated along the direction of movement X1. According to a possible embodiment of the present invention rotation angle A is kept constant.
Repeating the procedure for a convenient number of times n, where n=180°/A, permits to cover an angle of 180°, i.e. to characterize the flow of the liquid spray stream 195 on all the plane XY. Tests and the principles of tomography images have proven that with A=22,5°, and therefore n=8, a satisfying characterization of the flow of the liquid spray stream 195 on the plane XY can be reached. A value of A lower than 22,5°, and therefore a greater value of n, permits to reach a better characterization, i.e. a greater resolution on the plane XY.
An example of the results which can be obtained with the method described above with reference to Figure 4, are shown on Figure 6, where the surface 305 represents a measurement of the flow of the liquid spray stream 195 on the plane XY. The calculation of the three-dimensional area 315 below the surface 305 is proportional to the mass of liquid ejected by the nozzle 190.

Figure 5 illustrates a component of an alternative embodiment of the device shown in Figures 1, 2 and 4. In such embodiment a plurality of sensing wires 110, 210, 210, 310, 410, 510, 610, 710, 810 (8 sensing wires) lying on a common plane parallel to the first movement plane XY are used instead of the single wire 110. The sensing wires are angularly spaced from each other in such a way that the angle between any couple of angularly adjacent wires of said plurality of wires is constant and equal to 22,5°.
It is essential that there is no electrical contact between the sensing wires, in order to provide independent measurements by each of them. In order to avoid such an electrical contact the different wires may by arranged in the space without any mechanical contact. Alternatively or in combination, the different wires may be insulated from each other simply by means of an appropriate insulating coating.

With one single translation of the plurality of sensing wires 110, 210, 210, 310, 410, 510, 610, 710, 810 along the moving direction X1 it can be obtained the same characterization of the flow of the liquid spray stream 195 on the plane XY (Figure 6) described above with reference to the device and method embodiment of Figure 1 and 4, i.e with eight rotations and subsequent translations of one single wire 110.
According to different embodiments (not shown), a value of A lower than 22,5°, and therefore a greater number of sensing wires, permits to reach a better characterization, i.e. a greater resolution on the plane XY.
According to a possible variant extended embodiment of the present invention, which is applicable both to the embodiments of Figures 1 and 5, the movement unit 120 is mechanically connected to the sensing wires for translating them along the axis Z, i.e. also on a second movement plane YZ and on a third movement plane XZ across a spray volume of the liquid spray stream 195. With such an extended embodiment of the invention described here, the flow distribution of a liquid spray stream 195 on several planes parallel to the plane XY can be measured, thus permitting a characterization of the liquid spray stream 195 along all three Cartesian axis X, Y and Z.
The measurement devices as described in this document provide the advantage that a liquid spray stream can be dynamically measured and, compared to known measurement systems, can be measured with a higher resolution. Thereby, the sensing wire size or diameter and the displacement between two neighboring sensing wires can be much smaller respectively closer as compared to the cell size of known measurement systems, which are described in the introductory portion of this document.
It should be noted that the term "comprising" does not exclude other elements or steps and the use of articles "a" or "an" does not exclude a plurality. Also elements described in association with different embodiments may be combined, the scope of protection being defined by the appended claims. It should also be noted that reference signs in the claims should not be construed as limiting the scope of the claims.

## Claims

1. A measurement device (100) for measuring a flow distribution of a liquid spray stream (195) which has been atomized by a nozzle (190), the measurement device comprising
at least a first sensing wire (110),
an electric power supply unit (140), which is electrically connected to the sensing wire (110) and which is configured for supplying an electric current flowing through the sensing wire (110),
a measurement unit (150), which is electrically connected to the sensing wire (110) and which is configured for measuring an ohmic resistance change of the sensing wire (110), and
a movement unit (120), which is mechanically connected to the sensing wire (110) for moving the sensing wire (110) at least on a first movement plane (XY) which is orthogonal to a spray axis (Z) of the nozzle (190) across a spray volume of the liquid spray stream (195).

2. The measurement device (100) according to claim 1,
wherein the movement unit (120) is mechanically connected to sensing wire (110) for performing a translation of the sensing wire (110).

3. The measurement device (100) according to any of the preceding claims, wherein the movement unit (120) is mechanically connected to the sensing wire (110) for rotating the sensing wire (110) around a rotation axis (Z) orthogonal to the movement plane (XY).

4. The measurement device (100) according to any of the preceding claims, further comprising:
at least one further sensing wire (210, 210, 310, 410, 510, 610, 710, 810), angularly spaced from the first sensing wire (110),
the electric power supply unit (140) being electrically connected also with the further sensing wire (210, 210, 310, 410, 510, 610, 710, 810) and being configured for supplying a further electric current flowing through the further sensing wire (210, 210, 310, 410, 510, 610, 710, 810),
wherein the measurement unit (150) is electrically connected with the further sensing wire (210, 210, 310, 410, 510, 610, 710, 810) and is configured for measuring an ohmic resistance change of the further sensing wire (210, 210, 310, 410, 510, 610, 710, 810), and
wherein the movement unit (120) is mechanically connected also to the further sensing wire (210, 210, 310, 410, 510, 610, 710, 810) for moving the further sensing wire (210, 210, 310, 410, 510, 610, 710, 81) on the first movement plane (XY) across a spray volume of the liquid spray stream (195).

5. The measurement device (100) according to the preceding claim, comprising a plurality of sensing wires (110, 210, 210, 310, 410, 510, 610, 710, 810) lying on a common plane parallel to the first movement plane (XY) and angularly spaced from each other in such a way that the angle (A) between any couple of angularly adjacent wires of said plurality of wires (110, 210, 210, 310, 410, 510, 610, 710, 810) is constant.

6. The measurement device (100) according to the preceding claim, wherein the number of the wires of said plurality of wires (110, 210, 210, 310, 410, 510, 610, 710, 810) is equal or greater than 8.

7. The measurement device (100) according to any of the preceding claims, wherein the movement unit (120) is mechanically connected to the sensing wires (110, 210, 210, 310, 410, 510, 610, 710, 810) for moving the sensing wires (110, 210, 210, 310, 410, 510, 610, 710, 810) on a second movement plane (YZ) and/or a third movement plane (XZ) across a spray volume of the liquid spray stream (195), the second movement and third movement planes (YZ, XZ) being parallel to a spray axis (Z) of the nozzle (190).

8. A measurement method for measuring a flow distribution of a liquid spray stream (195) which has been atomized by a nozzle (190), the method comprising the steps of:
positioning a sensing wire (110) within a spray volume of the liquid spray stream (195),
supplying an electric current flowing through the sensing wire (110) by means of an electric power supply unit (140) which is electrically connected with the sensing wire (110),
moving the sensing wire (110) at least on a first movement plane (XY), which is orthogonal to a spray axis (Z) of the nozzle (190), across the spray volume of the liquid spray stream (195), by means of a movement unit (120), which is mechanically connected to the sensing wire (110),
measuring an ohmic resistance change of the sensing wire (110) resulting from a cooling of the sensing wire (110) caused by particles of the liquid spray stream (195) impinging onto the sensing wire (110) by means of a measurement unit (150) which is electrically connected with the sensing wire (110).

9. A measurement method according to claim 8, wherein the sensing wire (110) is moved parallel to itself on the first movement plane (XY).

10. A measurement method according to claim 9, wherein the sensing wire (110) is preliminarily rotated around a rotation axis (Z) orthogonal to the first movement plane (XY) and then moved parallel to itself on the first movement plane (XY).

11. A measurement method according to claim 8, comprising the steps of:
positioning a plurality of sensing wire (110, 210, 210, 310, 410, 510, 610, 710, 810) within a spray volume of the liquid spray stream (195),
supplying a plurality of electric currents respectively flowing through the plurality of sensing wires (110, 210, 210, 310, 410, 510, 610, 710, 810) by means of an electric power supply unit (140) which is electrically connected with the sensing wires (110, 210, 210, 310, 410, 510, 610, 710, 810),
moving the sensing wires (110, 210, 210, 310, 410, 510, 610, 710, 810) at least on a first movement plane (XY) across the spray volume of the liquid spray stream (195), by means of a movement unit (120), which is mechanically connected to the sensing wires (110, 210, 210, 310, 410, 510, 610, 710, 810),
measuring an ohmic resistance change of each of the sensing wires (110, 210, 210, 310, 410, 510, 610, 710, 810) resulting from a cooling of the sensing wires (110, 210, 210, 310, 410, 510, 610, 710, 810) caused by particles of the liquid spray stream (195) impinging onto the sensing wires (110, 210, 210, 310, 410, 510, 610, 710, 810), by means of a measurement unit (150) which is electrically connected with the sensing wires (110, 210, 210, 310, 410, 510, 610, 710, 810).

## Patentansprüche

1. Messvorrichtung (100) zum Messen einer Strömungsverteilung eines Flüssigkeitssprühstrahls (195), der durch eine Düse (190) zerstäubt wurde, wobei die Messvorrichtung Folgendes umfasst:
mindestens einen ersten Sensordraht (110),
ein elektrisches Netzteil (140), das elektrisch mit dem Sensordraht (110) verbunden ist und das zum Bereitstellen eines durch den Sensordraht (110) fließenden elektrischen Stroms konfiguriert ist,
eine Messeinheit (150), die mit dem Sensordraht (110) elektrisch verbunden ist und die zum Messen einer Änderung des ohmschen Widerstands des Sensordrahts (110) konfiguriert ist, und
eine Bewegungseinheit (120), die mit dem Sensordraht (110) mechanisch verbunden ist, um den Sensordraht (110) mindestens auf einer ersten, zu einer Sprühachse (Z) der Düse (190) senkrechten Bewegungsebene (XY) über ein Sprühvolumen des Flüssigkeitssprühstrahls (195) zu bewegen.

2. Messvorrichtung (100) nach Anspruch 1, wobei die Bewegungseinheit (120) mit dem Sensordraht (110) mechanisch verbunden ist, um eine Verschiebung des Sensordrahts (110) durchzuführen.

3. Messvorrichtung (100) nach einem der vorhergehenden Ansprüche, wobei die Bewegungseinheit (120) mit dem Sensordraht (110) mechanisch verbunden ist, um den Sensordraht (110) um eine zur Bewegungsebene (XY) senkrechte Drehachse (Z) zu drehen.

4. Messvorrichtung (100) nach einem der vorhergehenden Ansprüche, die ferner Folgendes umfasst:
mindestens einen weiteren Sensordraht (210, 210, 310, 410, 510, 610, 710, 810), der vom ersten Sensordraht (110) in Winkelrichtung beabstandet ist,
das elektrische Netzteil (140), das auch mit dem weiteren Sensordraht (210, 210, 310, 410, 510, 610, 710, 810) elektrisch verbunden ist und das zum Bereitstellen eines weiteren elektrischen Stroms konfiguriert ist, der durch den weiteren Sensordraht (210, 210, 310, 410, 510, 610, 710, 810) fließt,
wobei die Messeinheit (150) mit dem weiteren Sensordraht (210, 210, 310, 410, 510, 610, 710, 810) elektrisch verbunden ist und zum Messen einer Änderung des ohmschen Widerstands des weiteren Sensordrahts (210, 210, 310, 410, 510, 610, 710, 810) konfiguriert ist, und
wobei die Bewegungseinheit (120) auch mit dem weiteren Sensordraht (210, 210, 310, 410, 510, 610, 710, 810) mechanisch verbunden ist, um den weiteren Sensordraht (210, 210, 310, 410, 510, 610, 710, 81) auf der ersten Bewegungsebene (XY) über ein Sprühvolumen des Flüssigkeitssprühstrahls (195) zu bewegen.

5. Messvorrichtung (100) nach dem vorhergehenden Anspruch, die mehrere Sensordrähte (110, 210, 210, 310, 410, 510, 610, 710, 810) umfasst, die auf einer gemeinsamen, zur ersten Bewegungsebene (XY) parallelen Ebene liegen und die in Winkelrichtung derart voneinander beabstandet sind, dass der Winkel (A) zwischen jedem Paar von in Winkelrichtung benachbarten Drähte der mehreren Drähte (110, 210, 210, 310, 410, 510, 610, 710, 810) konstant ist.

6. Messvorrichtung (100) nach dem vorhergehenden Anspruch, wobei die Anzahl der Drähte der mehreren Drähte (110, 210, 210, 310, 410, 510, 610, 710, 810) gleich oder größer als 8 ist.

7. Messvorrichtung (100) nach einem der vorhergehenden Ansprüche, wobei die Bewegungseinheit (120) mit den Sensordrähten (110, 210, 210, 310, 410, 510, 610, 710, 810) mechanisch verbunden ist, um die Sensordrähte (110, 210, 210, 310, 410, 510, 610, 710 , 810) auf einer zweiten Bewegungsebene (YZ) und/oder auf einer dritten Bewegungsebene (XZ) über ein Sprühvolumen des Flüssigkeitssprühstrahls (195) zu bewegen, wobei die zweite und die dritte Bewegungsebene (YZ, XZ) parallel zu einer Sprühachse (Z) der Düse (190) liegen.

8. Messverfahren zum Messen einer Strömungsverteilung eines Flüssigkeitssprühstrahls (195), der durch eine Düse (190) zerstäubt wurde, wobei das Verfahren die folgenden Schritte umfasst:
Positionieren eines Sensordrahts (110) innerhalb eines Sprühvolumens des Flüssigkeitssprühstrahls (195),
Bereitstellen eines durch den Sensordraht (110) fließenden elektrischen Stroms mittels eines elektrischen Netzteils (140), das mit dem Sensordraht (110) elektrisch verbunden ist,
Bewegen des Sensordrahts (110) mindestens auf einer ersten, zu einer Sprühachse (Z) der Düse (190) senkrechten Bewegungsebene (XY) über ein Sprühvolumen des Flüssigkeitssprühstrahls (195) mittels einer Bewegungseinheit (120), die mit dem Sensordraht (110) mechanisch verbunden ist,
Messen einer Änderung des ohmschen Widerstands des Sensordrahts (110), die aus einer Kühlung des Sensordrahts (110) resultiert, die durch Partikel des Flüssigkeitssprühstrahls (195), die auf den Sensordraht (110) auftreffen, verursacht wird, mittels einer Messeinheit (150), die mit dem Sensordraht (110) elektrisch verbunden ist.

9. Messverfahren nach Anspruch 8, wobei der Sensordraht (110) parallel zu sich selbst auf der ersten Bewegungsebene (XY) bewegt wird.

10. Messverfahren nach Anspruch 9, wobei der Sensordraht (110) zuerst um eine Drehachse (Z) senkrecht zur ersten Bewegungsebene (XY) gedreht und dann parallel zu sich selbst auf der ersten Bewegungsebene (XY) bewegt wird.

11. Messverfahren nach Anspruch 8, das die folgenden Schritte umfasst:
Positionieren von mehreren Sensordrähten (110, 210, 210, 310, 410, 510, 610, 710, 810) innerhalb eines Sprühvolumens des Flüssigkeitssprühstrahls (195),
Bereitstellen von mehreren elektrischen Strömen, die entsprechend durch die mehreren Sensordrähte (110, 210, 210, 310, 410, 510, 610, 710, 810) fließen, mittels eines elektrischen Netzteils (140), das elektrisch mit den Sensordrähten (110, 210, 210, 310, 410, 510, 610, 710, 810) verbunden ist,
Bewegen der Sensordrähte (110, 210, 210, 310, 410, 510, 610, 710, 810) mindestens auf einer ersten Bewegungsebene (XY) über das Sprühvolumen des Flüssigkeitssprühstrahls (195) mittels einer Bewegungseinheit (120), die mit den Sensordrähten (110, 210, 210, 310, 410, 510, 610, 710, 810) mechanisch verbunden ist, und
Messen einer Änderung des ohmschen Widerstands jedes der Sensordrähte (110, 210, 210, 310, 410, 510, 610, 710, 810), die aus einer Kühlung der Sensordrähte (110, 210, 210, 310, 410, 510, 610, 710, 810) resultiert, die durch Partikel des Flüssigkeitssprühstrahls (195) verursacht wird, die auf die Sensordrähte (110, 210, 210, 310, 410, 510, 610, 710, 810) auftreffen, mittels einer Messeinheit (150), die mit den Sensordrähten (110, 210, 210, 310, 410, 510, 610, 710, 810) elektrisch verbunden ist.

## Revendications

1. Dispositif (100) de mesure destiné à mesurer une répartition d'écoulement d'un flux (195) de pulvérisation de liquide qui a été atomisé par une buse (190), le dispositif de mesure comportant
au moins un premier fil (110) de détection,
une unité (140) d'alimentation électrique, qui est reliée électriquement au fil (110) de détection et qui est configurée pour fournir un courant électrique circulant à travers le fil (110) de détection,
une unité (150) de mesure, qui est reliée électriquement au fil (110) de détection et qui est configurée pour mesurer une variation de résistance ohmique du fil (110) de détection, et une unité (120) de mouvement, qui est reliée mécaniquement au fil (110) de détection pour déplacer le fil (110) de détection au moins sur un premier plan (XY) de mouvement qui est orthogonal à un axe (Z) de pulvérisation de la buse (190) à travers un volume de pulvérisation du flux (195) de pulvérisation de liquide.

2. Dispositif (100) de mesure selon la revendication 1, l'unité (120) de mouvement étant reliée mécaniquement au fil (110) de détection pour effectuer une translation du fil (110) de détection.

3. Dispositif (100) de mesure selon l'une quelconque des revendications précédentes, l'unité (120) de mouvement étant reliée mécaniquement au fil (110) de détection pour faire pivoter le fil (110) de détection autour d'un axe (Z) de rotation orthogonal au plan (XY) de mouvement.

4. Dispositif (100) de mesure selon l'une quelconque des revendications précédentes, comportant en outre :
au moins un fil supplémentaire (110, 210, 210, 310, 410, 510, 610, 710, 810) de détection, espacé angulairement par rapport au premier fil (110) de détection,
l'unité (140) d'alimentation électrique étant également reliée électriquement au fil supplémentaire (110, 210, 210, 310, 410, 510, 610, 710, 810) de détection et étant configurée pour fournir un courant électrique supplémentaire circulant à travers le fil supplémentaire (110, 210, 210, 310, 410, 510, 610, 710, 810) de détection,
l'unité (150) de mesure étant reliée électriquement au fil supplémentaire (110, 210, 210, 310, 410, 510, 610, 710, 810) de détection et étant configurée pour mesurer une variation de résistance ohmique du fil supplémentaire (110, 210, 210, 310, 410, 510, 610, 710, 810) de détection, et
l'unité (120) de mouvement étant également reliée mécaniquement au fil supplémentaire (110, 210, 210, 310, 410, 510, 610, 710, 810) de détection pour déplacer le fil supplémentaire (110, 210, 210, 310, 410, 510, 610, 710, 810) de détection sur le premier plan (XY) de mouvement à travers un volume de pulvérisation du flux (195) de pulvérisation de liquide.

5. Dispositif (100) de mesure selon la revendication précédente, comportant une pluralité de fils (110, 210, 210, 310, 410, 510, 610, 710, 810) de détection reposant sur un plan commun parallèle au premier plan (XY) de mouvement et espacés angulairement les uns par rapport aux autres de telle façon que l'angle (A) entre un doublet quelconque de fils angulairement adjacents de ladite pluralité de fils (110, 210, 210, 310, 410, 510, 610, 710, 810) soit constant.

6. Dispositif (100) de mesure selon la revendication précédente, le nombre des fils de ladite pluralité de fils (110, 210, 210, 310, 410, 510, 610, 710, 810) soit supérieur ou égal à 8.

7. Dispositif (100) de mesure selon l'une quelconque des revendications précédentes, l'unité (120) de mouvement étant reliée mécaniquement aux fils (110, 210, 210, 310, 410, 510, 610, 710, 810) de détection pour déplacer les fils (110, 210, 210, 310, 410, 510, 610, 710, 810) de détection sur un deuxième plan (YZ) de mouvement et/ou un troisième plan (XZ) de mouvement à travers un volume de pulvérisation du flux (195) de pulvérisation de liquide, les deuxième et troisième plans (YZ, XZ) de mouvement étant parallèles à un axe (Z) de pulvérisation de la buse (190).

8. Procédé de mesure destiné à mesurer une répartition d'écoulement d'un flux (195) de pulvérisation de liquide qui a été atomisé par une buse (190), le procédé comportant les étapes consistant à :
positionner un fil (110) de détection à l'intérieur d'un volume de pulvérisation du flux (195) de pulvérisation de liquide,
fournir un courant électrique circulant à travers le fil (110) de détection au moyen d'une unité (140) d'alimentation électrique qui est reliée électriquement au fil (110) de détection,
déplacer le fil (110) de détection au moins sur un premier plan (XY) de mouvement, qui est orthogonal à un axe (Z) de pulvérisation de la buse (190), à travers le volume de pulvérisation du flux (195) de pulvérisation de liquide, au moyen d'une unité (120) de mouvement, qui est reliée mécaniquement au fil (110) de détection,
mesurer une variation de résistance ohmique du fil (110) de détection, résultant d'un refroidissement du fil (110) de détection causé par des particules du flux (195) de pulvérisation de liquide frappant le fil (110) de détection, au moyen d'une unité (150) de mesure qui est reliée électriquement au fil (110) de détection.

9. Procédé de mesure selon la revendication 8, le fil (110) de détection étant déplacé parallèlement à lui-même sur le premier plan (XY) de mouvement.

10. Procédé de mesure selon la revendication 9, le fil (110) de détection subissant une rotation préliminaire autour d'un axe (Z) de rotation orthogonal au premier plan (XY) de mouvement et étant ensuite déplacé parallèlement à lui-même sur le premier plan (XY) de mouvement.

11. Procédé de mesure selon la revendication 8, comportant les étapes consistant à :
positionner une pluralité de fils (110, 210, 210, 310, 410, 510, 610, 710, 810) de détection à l'intérieur d'un volume de pulvérisation du flux (195) de pulvérisation de liquide,
fournir une pluralité de courants électriques circulant respectivement à travers la pluralité de fils (110, 210, 210, 310, 410, 510, 610, 710, 810) de détection, au moyen d'une unité (140) d'alimentation électrique qui est reliée électriquement aux fils (110, 210, 210, 310, 410, 510, 610, 710, 810) de détection,
déplacer les fils (110, 210, 210, 310, 410, 510, 610, 710, 810) de détection au moins sur un premier plan (XY) de mouvement à travers le volume de pulvérisation du flux (195) de pulvérisation de liquide, au moyen d'une unité (120) de mouvement, qui est reliée mécaniquement aux fils (110, 210, 210, 310, 410, 510, 610, 710, 810) de détection,
mesurer une variation de résistance ohmique de chacun des fils (110, 210, 210, 310, 410, 510, 610, 710, 810) de détection, résultant d'un refroidissement de les fils (110, 210, 210, 310, 410, 510, 610, 710, 810) de détection causé par des particules du flux (195) de pulvérisation de liquide frappant les fils (110, 210, 210, 310, 410, 510, 610, 710, 810) de détection, au moyen d'une unité (150) de mesure qui est reliée électriquement aux fils (110, 210, 210, 310, 410, 510, 610, 710, 810) de détection.
